# EUROPÄISCHE PATENTANMELDUNG

(11) **EP 1 233 201 A2**
(43) Veröffentlichungstag der Anmeldung: **21.08.2002**
(21) Anmeldenummer: 02003699.2
(22) Anmeldetag: 19.02.2002
(51) Int. Cl.: F16D 65/12

(54) **Innenbelüftete, in einem Guss hergestellte Bremsscheibe**

(30) Priorität: 19.02.2001 DE 10107983
(71) Anmelder: Fritz Winter Eisengiesserei GmbH & Co. KG, 35254 Stadtallendorf (DE)
(72) Erfinder: Becker, Reiner, 35466 Rabenau (DE)
(74) Vertreter: Cohausz & Florack

(57) **Zusammenfassung**

Die Erfindung betrifft eine Bremsscheibe, die in einem Guß aus einem Gußwerkstoff einstückig gegossen ist, mit zwei parallel und beabstandet zueinander angeordneten Reibringen (3,4), mit beabstandet zueinander angeordneten, sich in radialer Richtung zwischen den Reibringen (3,4) erstreckenden Rippen (6), mit einem konzentrisch zu den Reibringen (3,4) angeordneten Trägerteil (2), dessen Außendurchmesser kleiner ist als der Innendurchmesser der Ringöffnung der Reibringe (3,4), und mit ausgehend von dem Trägerteil (2) sich im wesentlich radial erstreckenden, um das Trägerteil (2) verteilt angeordneten Stegen (7), die das Trägerteil (2) mit den Reibringen (3,4) verbinden und mit ihrem den Reibringen (3,4) zugeordneten Ende (7a) jeweils mittig zwischen den Reibringen (3,4) enden. Bei einer solchen Bremsscheibe ist die Gefahr einer zu großen Erwärmung minimiert und das Komforverhalten deutlich verbessert.

## Beschreibung

Die Erfindung betrifft eine innenbelüftete Bremsscheibe, die einstückig in einem Guß hergestellt ist. Solche Bremsscheiben sind jeweils mit zwei Reibringen ausgestattet, die beabstandet zueinander angeordnet sind. In dem zwischen den Reibringen vorhanden Zwischenraum sind dabei in der Regel Rippen angeordnet, durch die während der Fahrt Luft zwischen die Reibringe geleitet wird. Auf diese Weise können die Reibringen nicht nur über ihre von den Reibbelägen der jeweiligen Bremseinrichtung belasteten Reibflächen sondern auch über die dem Zwischenraum zugeordneten Flächen aktiv Wärme abgeben.

Bremsscheiben der in Rede stehenden Art werden an Personenkraftwagen ("PKW's") und schweren Lastkraftwagen ("LKW's") eingesetzt, an denen sie im praktischen Einsatz hohen mechanischen und thermischen Belastungen unterworfen sind. Dies gilt insbesondere dann, wenn die Kraftfahrzeuge aus hohen Geschwindigkeiten oder unter einer hohen Last abgebremst werden müssen.

Beim Bremsvorgang wird die anfangs dem Fahrzeuge eigene kinetische Energie zum weitaus überwiegenden Teil in Wärme umgewandelt, welche über die Bremsscheibe abgeführt wird. Ein Problem besteht dabei darin, daß die Bremsscheiben sich in Folge der Erwärmung verformen. Bei aus der Praxis bekannten Bremsscheiben ist beobachtget worden, daß die Reibscheiben infolge dieser Erwärmung sich schirmartig verformen, da sie sich an ihrem äußeren Rand mehr aufweiten können als an ihrem inneren Rand und da gleichzeitig ihr innerer Rand fest gehalten wird. Diese in der Fachsprache auch "Schirmung" genannten, durch die Erwärmung ausgelösten Verformungen bringen bei besonders hohen Belastungen, wie sie beispielsweise bei häufig aufeinanderfolgenden Bremsvorgängen unter hoher Last oder Geschwindigkeit gegeben sind, die Gefahr mit sich, daß die Bremsscheibe auch nach der Abkühlung verformt bleibt und somit unbrauchbar wird. Eine andere durch eine übermäßige Erwärmung verursachte Gefahr besteht in der Entstehung von Spannungsrissen. Diese werden verursacht, wenn der Gußwerkstoff der Bremsscheibe die sich aufgrund ungleichmäßiger Wärmeverteilung in der Bremsscheibe entstehenden Spannungen nicht mehr aufnehmen kann.

Es ist versucht worden, die Gefahr einer zu hohen Erwärmung von innenbelüfteten Bremsscheiben durch eine Optimierung der Form der Rippen zu mindern. Auf diese Weise soll eine möglichst große Luftmenge durch den Raum zwischen den Reibringen geleitet werden. Allerdings sind den Möglichkeiten der Gestaltung der Rippen aufgrund der sich aus der gießtechnischen Herstellung ergebenden Anforderungen Grenzen gesetzt.

Die Aufgabe der Erfindung besteht darin, eine Bremsscheibe zu schaffen, bei der die Gefahr einer zu großen Erwärmung minimiert ist und die gleichzeitig auf einfache Weise durch Vergießen von Gießwerkstoff hergestellt werden kann.

Diese Aufgabe wird durch eine in einem Guß aus einem Gußwerkstoff einstückig gegossene Bremsscheibe gelöst, die mit zwei parallel und beabstandet zueinander angeordneten Reibringen, mit beabstandet zueinander angeordneten, sich in radialer Richtung zwischen den Reibringen erstreckenden Rippen, mit einem konzentrisch zu den Reibringen angeordneten Trägerteil, dessen Außendurchmesser kleiner ist als der Innendurchmesser der Ringöffnung der Reibringe, und mit ausgehend von dem Trägerteil sich im wesentlich radial erstreckenden, um das Trägerteil verteilt angeordneten Stegen ausgestattet ist, die das Trägerteil mit den Reibringen verbinden und mit ihrem den Reibringen zugeordneten Ende jeweils mittig zwischen den Reibringen enden.

Die Besonderheit einer erfindungsgemäßen Bremsscheibe besteht darin, daß die das Trägerteil mit den Reibringen verbindenden Stege mittig zwischen den Reibringen enden. Auf diese Weise wird einerseits verhindert, daß sich die Bremsscheiben infolge unterschiedlicher Wärmeabfuhr aufgrund ungleichförmiger Materialanhäufungen während des Bremsvorgangs abschnittsweise unterschiedlich erwärmen. Stattdessen erwärmen sich bei erfindungsgemäßen Bremsscheiben die Reibringe gleichmäßig über die gesamte zur Verfügung stehende Reibfläche. Infolgedessen ist die Gefahr der Entstehung von Spannungsrissen auf ein Minimum reduziert.

Gleichzeitig ist durch die erfindungsgemäße Anbindung der Reibringe an das Trägerteil sichergestellt, daß sich die Reibringe bei Erwärmung gleichmäßig aufweiten können. Durch die erfindungsgemäße Anordnung der Stege ist dabei sichergestellt, daß die Reibflächen der Reibringe auch während des Bremsvorgangs ihre im wesentlichen normal zur Längsachse der Bremsscheibe ausgerichtete Lage beibehalten. Die Gefahr der Entstehung einer "Schirmung" ist dadurch bei erfindungsgemäß ausgebildeten Bremsscheiben auf ein Minimum reduziert.

Indem bei erfindungsgemäßen Bremsscheiben wirksam der Gefahr der Entstehung von ungleichmäßigen Verformungen entgegengewirkt ist, ist einerseits die beim Stand der Technik vorhandene Quelle für die Entstehung von Geräuschen und Vibrationen während eines Bremsvorgangs beseitigt und andererseits die Gefahr der Entstehung von bleibenden Verformungen praktisch nicht mehr gegeben. Insgesamt führt dies neben einer verlängerten Lebensdauer zu einem verbesserten Komfortverhalten, das sich durch einen ruhigen Lauf der Bremsscheibe und eine ebenso ruhige Funktion des mit ihr zusammenwirkenden Bremssystems auszeichnet.

Gemäß einer ersten vorteilhaften Variante der Erfindung ist weisen die Stege eine Form auf, die symmetrisch zu einer parallel zu den Reibfläche der Reibringe und zwischen den Reibringen angeordneten Ebene ausgebildet ist. Bei einer derart symmetrischen Anordnung und Ausformung der Stege ist eine besonders gleichmäßige Wärmeableitung gewährleistet.

Eine andere vorteilhafte Ausgestaltung einer erfindungsgemäßen Bremsscheibe ist dadurch gekennzeichnet, daß die Stege einen Abschnitt aufweisen, der gegenüber einer parallel zu den Reibflächen der Reibringe verlaufenden und zwischen den Reibringen ausgerichteten Ebene abgewinkelt verläuft. Unter Temperatureinfluß zeigen die Reibringe eine parallele axiale Versetzung. Durch den zumindest abschnittweisen schrägen Verlauf kann die axiale Lage der Anbindung der Stege an das Trägerelement dabei so ausgestaltet werden, daß dieser axiale Versatz in die eine oder die andere Richtung achsparallel zur Längsachse der Bremsscheibe erfolgt. Auf diese Weise kann der axiale Versatz bei an einem Kraftfahrzeug montierter Bremsscheibe gezielt zur Fahrzeugmitte oder zur Fahrzeugaußenseite gelenkt werden. Die Neigung zur Schirmung ist bei einer derart ausgestalten erfindungsgemäßen Bremsscheibe demzufolge auf ein Minimum reduziert.

Das Trägerteil kann zum einen topfförmig ausgebildet sein, so daß auf seiner Stirnseite die Nabe des Rades direkt befestigt und die Bremscheibe auf ein Lager an der Fahrzeugachse aufgeschoben werden kann. Zum anderen kann das Trägerteil auch selbst die Nabe bilden, in der das jeweilige Radlager angeordnet ist. In diesem Fall wird das Rad des Fahrzeugs in der Regel über einen Zwischenflansch mit dem Trägerteil verbunden. Letztere Variante ermöglicht auf vereinfachte Weise die Wartung des Radlagers sowie die sichere Montage von wartungsfreien, eine lange Lebensdauer aufweisenden Radlagern.

Eine im Hinblick auf die Wärmeabfuhr weiter verbesserte Ausgestaltung der Erfindung ist dadurch gekennzeichnet, daß die Rippen jeweils über den inneren Rand der Reibringe hinaus verlängert sind. Die in den zwischen dem Trägerteil und den Reibringen verbleibenden freien Raum ragenden verlängerten Endabschnitte fördern zusätzlich Luft durch den freien Raum zwischen den Reibringen. Sie sorgen so für eine bessere Durchströmung der Scheibe mit Kühlluft. Um dabei einen Strömungsabriß und die Ausbildung stehender Turbulenzen zu vermeiden, sollten die Rippen an ihrem jeweils verlängerten Ende frei von scharfen Kanten sind. Dies kann dadurch ermöglicht werden, daß die Rippen mindestens an den sich zwischen den Reibringen erstreckenden Längsseiten ihres jeweils verlängerten Endes mit einer Anphasung versehen sind. Der optimale Anphasungswinkel richtet sich dabei nach der Ausgestaltung des zwischen dem Trägerelement und den Reibringen, den zueinander jeweils benachbarten bzw. zwischen den Reibringen jeweils verbleibenden freien Raums.

Praktische Versuche haben ergeben, daß sich bei erfindungsgemäß ausgebildeten Bremsscheiben auch unter hohen Belastungen gegenüber herkömmlich ausgebildeten Scheiben deutlich verminderte Temperaturen einstellen. Dies führt nicht nur dazu, daß die mit einer zu großen Erwärmung verbundenen Gefahren sicher vermieden werden, sondern wirkt sich auch günstig auf das Komfortverhalten der Bremsscheiben günstig aus.

Weitere vorteilhafte Ausgestaltungen der Erfindung sind in den abhängigen Ansprüche angegeben und werden im Zusammenhang mit dem nachfolgend anhand einer Zeichnung beschriebenen Ausführungsbeispiel näher erläutert. Es zeigen:

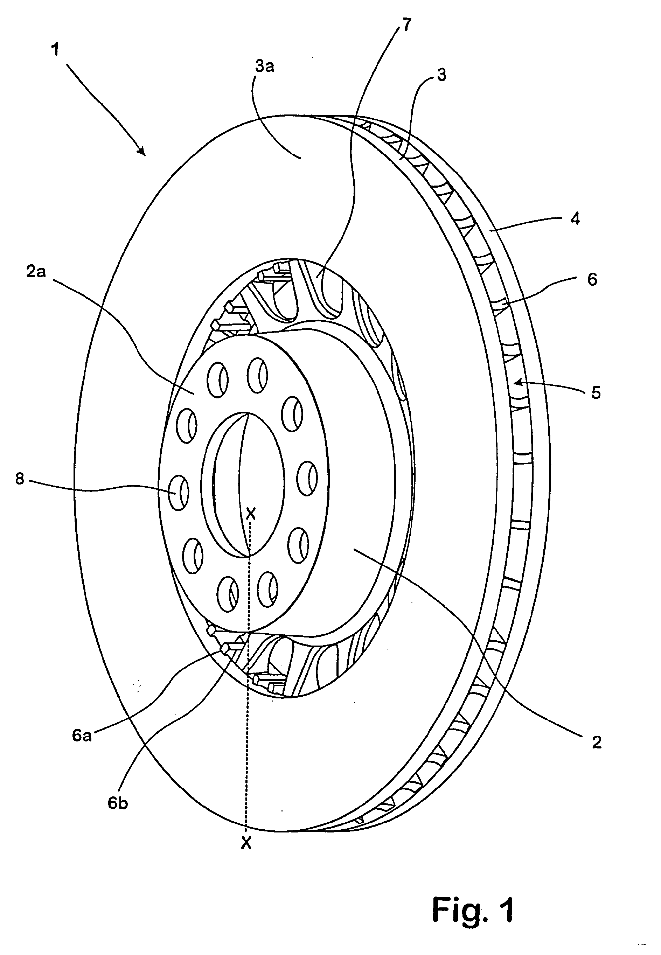

- Fig. 1: eine Reibscheibe in perspektivischer Ansicht,

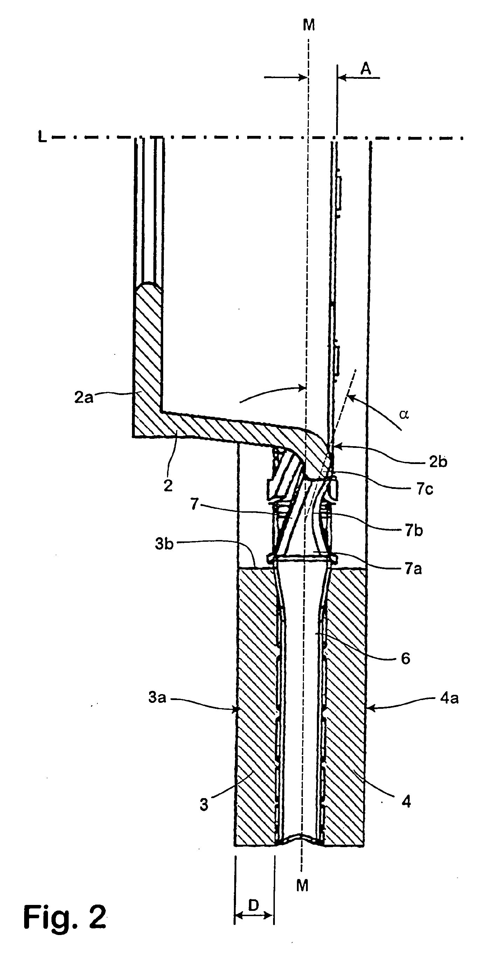

- Fig. 2: die Reibscheibe in einem Schnitt entlang der in Fig. 1 angegebenen Linie X-X.

Die aus einem Eisengußwerkstoff in einem Guß gegossene, einstückig ausgebildete Bremsscheibe 1 weist einen zentral angeordnetes, topfförmiges Trägerteil 2, das in der von zwei konzentrisch zum Trägerteil 2 und beabstandet zueinander angeordneten Reibringe 3,4 umgebenen Ringöffnung sitzt, im Zwischenraum 5 zwischen den Reibringen 3,4 angeordnete Rippen 6 sowie Stege 7 auf, über die das Trägerteil 2 mit den Reibringen 3,4 verbunden ist. Die von den Reibringe 3,4 umgebene Ringöffnung weist einen Durchmesser auf, der größer ist, als der größte Umfangsdurchmesser des Trägerteils 2.

In die äußere Stirnseite 2a des topfförmigen Trägerteils 2 sind in gleichmäßigen Winkelabständen um die Längsachse L der Bremsscheibe 1 verteilt Durchgangsöffnungen 8 eingeformt, durch die zur Befestigung eines Rades an der Achse eines mit der Bremsscheibe 1 ausgestatteten PKW's Schraubenbolzen geschraubt werden können.

An den der äußeren Stirnseite 2a gegenüberliegenden rückwärtigen, in Montagestellung der Fahrzeugmitte zugeordneten Rand 2b des Trägerteils 2 sind die in gleichmäßigen Winkelabständen um das Trägerteil herum verteilten Stege 7 angebunden. Die Reibringe 3,4 sind dabei in Bezug auf das Trägerteil 2 so angeordnet, daß eine parallel zu den Reibflächen 3a,4a der Reibringe 3,4, normal zur Längsachse L ausgerichtete und mittig im Zwischenraum 5 zwischen den Reibringen 3,4 positionierte Ebene M um einen Abstand A in Richtung der äußeren Stirnseite 2a gegenüber dem rückwärtigen Rand 2b versetzt das Trägerteil 2 schneidet. Das den Reibringen 3,4 zugeordnete Ende 7a der Stege 7 ist jeweils mittig zu den Reibringen 3,4 ausgerichtet und geht dort jeweils in mindestens zwei der Rippen 6 über. Auf diese Weise stehen die Reibringe 3,4 in symmetrischer Anordnung jeweils sowohl mit ihrer gesamten Dicke D in seitlicher Richtung als auch in radialer Richtung frei über die Enden 7a der Stege 7 hinaus.

An das mittig zwischen den Bremsringen 3,4 und symmetrisch zur Ebene M angeordnete Ende 7a schließt sich ein Abschnitt 7b der Stege 7 an, der einen von der Ebene M in Richtung des rückwärtigen Randes 2b des Trägerteils 2 um einen Winkel α abgewinkelten Verlauf aufweist. Kurz vor Erreichen des Trägerteils 2 geht dieser Abschnitt 7b in einen gleichmäßig in Richtung des Trägerteils 2 gekrümmten, im Querschnitt einen annähernd einen Viertelkreis umlaufenden Abschnitt 7c über, über den die Stege 7 in einem tangentialen, sprungfreien Übergang an das Trägerteil 2 angebunden sind. Die Geometrie der Stege 7, ihre Massenverteilung und der Winkelbetrag α, um den ihr Abschnitt 7b von der Mittelebene M abweicht, werden durch die bei Bremsvorgang maximal zu erwartende Belastung bestimmt und sind durch FEM-Berechnungsmethoden ermittelt worden.

Die in gleichen Winkelabständen um das Trägerteil 2 herum verteilten Rippen 6 stehen mit ihren dem Trägerteil zugeordneten Ende 6a über den inneren Rand 3b der Reibringe 3,4 um eine Höhe hinaus, die einem kleinen Bruchteil des zwischen den Bremsringen 3,4 und dem Trägerteil verbleibenden freien Abstands entspricht. Mindestens die sich zwischen den Reibringen 3,4 erstreckenden Längsseiten 6b der Enden 6a sind dabei mit einer Anphasung versehen, so daß scharfe Kanten an den Enden 6a vermieden sind. Der Winkel der Anphasung ist dabei so gewählt, daß bei im Betrieb sich drehender Bremsscheibe 1 die Entstehung von stehenden Turbulenzen im Bereich zwischen den Reinbringen 3,4 und dem Trägerteil 2 sicher vermieden werden. Statt dessen unterstützen die Rippen 6 mit ihren innenseitig verlängerten Ende 6a das Einströmen von Luft in von jeweils zwei Rippen 6 im Zwischenraum 5 zwischen den Reibringen 3,4 gebildeten Kanäle.

Praktische Versuche mit entsprechend der Bremsscheibe 1 ausgebildeten Scheiben an PKW's haben ergeben, daß auch im hochbelasteten Dauerbetrieb die maximale Scheibentemperatur 500 °C nicht überschreitet. Durch den abschnittsweise abgewinkelten Verlauf der Stege 7 tritt zudem bei Erwärmung ein in Richtung der vorderen Stirnseite 2a gelenkter paralleler Versatz der Reibringe 3,4 ein, dem die nicht dargestellte Bremsanlage des jeweiligen Fahrzeugs problemlos folgen kann. Dementsprechend zeichnen sich die Bremsscheiben 1 durch ein hervorragendes Komfortverhalten aus.

### BEZUGSZEICHEN

- 1: Bremsscheibe
- 2: topfförmiges Trägerteil
- 2a: äußere Stirnseite 2a des topfförmigen Trägerteils 2
- 2b: der Stirnseite 2a gegenüberliegender Rand des Trägerteils 2
- 3,4: Reibringe
- 3b: innerer Rand der Reibringe 3,4
- 3a,4a: Reibflächen der Reibringe 3,4
- 5: Zwischenraum
- 6: Rippen
- 6a: dem Trägerteil jeweils zugeordnetes Ende der Rippen 6
- 6b: Längsseiten der Enden 6a
- 7: Stege
- 7a: den Reibringen 3,4 zugeordnetes Ende der Stege 7
- 7b: schräg verlaufender Abschnitt der Stege 7
- 7c: gekrümmter Abschnitt, mit dem die Stege 7 in das Trägerteil übergehen,
- 8: Durchgangsöffnungen
- α: Winkel
- A: Abstand, um den die Ebene M zum rückwärtigen Rand 2b des Trägerteils 2 versetzt angeordnet ist,
- D: Dicke der Reibringe 3,4
- L: Längsachse
- M: mittig im Zwischenraum zwischen den Reibringen 3,4 positionierte Ebene

## Patentansprüche

1. Bremsscheibe, die in einem Guß aus einem Gußwerkstoff einstückig gegossen ist,
- mit zwei parallel und beabstandet zueinander angeordneten Reibringen (3,4),
- mit beabstandet zueinander angeordneten, sich in radialer Richtung zwischen den Reibringen (3,4) erstreckenden Rippen (6),
- mit einem konzentrisch zu den Reibringen (3,4) angeordneten Trägerteil (2), dessen Außendurchmesser kleiner ist als der Innendurchmesser der Ringöffnung der Reibringe (3,4), und
- mit ausgehend von dem Trägerteil (2) sich im wesentlich radial erstreckenden, um das Trägerteil (2) verteilt angeordneten Stegen (7), die das Trägerteil (2) mit den Reibringen (3,4) verbinden und mit ihrem den Reibringen (3,4) zugeordneten Ende (7a) jeweils mittig zwischen den Reibringen (3,4) enden.

2. Bremsscheibe nach Anspruch 1, **dadurch gekennzeichnet**, d a ß die Stege (7) eine Form aufweisen, die symmetrisch zu einer parallel zu den Reibfläche (3a,4a) der Reibringe (3,4) zwischen den Reibringen (3,4) angeordneten Ebene (M) ausgebildet ist.

3. Bremsscheibe nach einem der voranstehenden Ansprüche, **dadurch gekennzeichnet, daß** die Stege (7) jeweils als Verlängerung mindesten einer der Rippen (6) ausgebildet sind.

4. Bremsscheibe nach einem der voranstehenden Ansprüche, **dadurch gekennzeichnet, daß** die Stege (7) einen Abschnitt (7b) aufweisen, der gegenüber einer parallel zu den Reibflächen (3a,4a) der Reibringe (3,4) verlaufenden und zwischen den Reibringen (3,4) ausgerichteten Ebene (M) abgewinkelt verläuft.

5. Bremsscheibe nach einem der voranstehenden Ansprüche, **dadurch gekennzeichnet, daß** die Stege (7) in gleichmäßigen Winkelabständen um das Trägerteil (2) verteilt angeordnet sind.

6. Bremsscheibe nach einem der voranstehenden Ansprüche, **dadurch gekennzeichnet, daß** das Trägerteil (2) topfförmig ausgebildet ist.

7. Bremsscheibe nach einem der voranstehenden Ansprüche, **dadurch gekennzeichnet, daß** die Stege (7) an einer Stirnseite (2b) des Trägerteils (2) angebunden sind.

8. Bremsscheibe nach einem der voranstehenden Ansprüche, **dadurch gekennzeichnet**, daβ die Rippen (6) jeweils über den inneren Rand (3b) der Reibringe (3,4) hinaus verlängert sind.

9. Bremsscheiben nach Anspruch 8, **dadurch gekennzeichnet, daß** die Rippen (6) an ihrem jeweils verlängerten Ende (6a) frei von scharfen Kanten sind.

10. Bremsscheibe nach Anspruch 8 oder **9, dadurch gekennzeichnet,** daβ die Rippen (6) mindestens an den sich zwischen den Reibringen (3,4) erstreckenden Längsseiten (6b) ihres verlängerten Endes (6a) mit einer Anphasung versehen sind.
